# EUROPEAN PATENT APPLICATION

(11) **EP 3 610 735 A1**
(43) Date of publication of application: **19.02.2020**
(21) Application number: 18197849.5
(22) Date of filing: 01.10.2018
(51) Int. Cl.: A24F 1/00, A24F 47/00, G06K 9/00

(54) **UNLOCKING METHOD FOR ELECTRONIC CIGARETTE, UNLOCKING DEVICE USING SAME AND COMPUTER READABLE STORAGE MEDIUM**

(30) Priority: 17.08.2018 CN 201810940879
(71) Applicant: Shenzhen IVPS Technology Co., Ltd., 518000 Shenzhen Guangdong (CN)
(72) Inventor: OUYANG, Junwei, Shenzhen, Guangdong 518000 (CN)
(74) Representative: IP-PAL Patent & Trademark Attorneys GmbH

(57) **Abstract**

The present invention discloses a method for unlocking an electronic cigarette, comprising the steps of: receiving an unlocking instruction, activating a display interface, and acquiring a password input by the user; determining whether the password is consistent with the preset password; and entering the activation state when the password is consistent with the preset password. The present invention also discloses a device for unlocking an electronic cigarette and a computer readable storage medium. The present invention realizes that the electronic cigarette enters an activation state by verifying the password input by the user, thereby improving the security of the use of the electronic cigarette.

## Description

### TECHNICAL FIELD

The present invention relates to the technical field of electronic cigarettes, and in particular, to an unlocking method for an electronic cigarette, an unlocking device using same and a computer readable storage medium.

### BACKGROUND

Electronic cigarettes are a relatively mature alternative to smoking on the market. After unlocking and starting the electronic cigarette, the battery heating element atomizes the tobacco tar in the atomizer to form smoke harmless to the human body. The smoker does not absorb tar and other harmful substances in the traditional cigarette when experiencing the smoking fun. Therefore, with the improvement of health awareness of people, electronic cigarettes are highly respected by the majority of smokers.

At present, the traditional electronic cigarette is directly unlocked using a button when being unlocked. An unlocking button is provided to unlock by detecting the pressing operation of the unlocking button by the user. The electronic cigarette is not encrypted, which is easily misused by other users. Therefore, the existing method for unlocking an electronic cigarette is low in security performance.

The above content is only configured to assist in understanding the technical solutions of the present invention, and does not constitute an admission that the above content is a prior art.

### SUMMARY

The main object of the present invention is to provide an unlocking method for an electronic cigarette, an unlocking device using same and a computer readable storage medium, which aims to solve the technical problem that the existing electronic cigarette is low in security performance.

To achieve the above object, the present invention provides a method for unlocking an electronic cigarette, wherein the method for unlocking the electronic cigarette comprises the steps of:
receiving an unlocking instruction, activating a display interface, and acquiring a password input by the user;
determining whether the password is consistent with the preset password; and
entering the activation state when the password is consistent with the preset password.

Preferably, subsequent to the step of receiving an unlocking instruction, activating a display interface, and acquiring a password input by the user, the method for unlocking the electronic cigarette further comprises:
matching the password with a preset password set, and determining whether there is a preset password matching the password in the preset password set, wherein the preset password set comprises a plurality of passwords, and each of the passwords corresponds to each mode; and
entering the mode corresponding to the preset password and entering the activation state when the preset password exists.

Preferably, the step of entering the mode corresponding to the preset password and entering the activation state when the preset password exists comprises:
determining the mode corresponding to the preset password when the preset password exists;
acquiring a parameter corresponding to the mode; and
starting the corresponding mode based on the parameter and entering the activation state.

Preferably, subsequent to the step of matching the password with a preset password set, and determining whether there is a preset password matching the password in the preset password set, wherein the preset password set comprises a plurality of passwords, and each of the passwords corresponds to each mode, the method for unlocking the electronic cigarette further comprises:
acquiring the number of times the user currently inputs the password when the preset password does not exist;
determining whether the number of times is greater than a preset threshold; and
limiting the operation that the user inputs a password when the number of times is greater than a preset threshold.

Preferably, subsequent to the step of entering the mode corresponding to the preset password and entering the activation state when the preset password exists, the method for unlocking the electronic cigarette further comprises:
detecting whether a parameter adjustment action exists during the first preset time period; and
entering the lock screen standby state if the parameter adjustment action does not exist during the first preset time period.

Preferably, subsequent to the step of entering the lock screen standby state if the parameter adjustment action does not exist during the first preset time period, the method for unlocking the electronic cigarette further comprises:
detecting whether a smoking operation exists during the second preset time period; and
entering the off state if a smoking operation does not exist during the second preset time period.

Preferably, subsequent to the step of detecting whether a parameter adjustment action exists during the first preset time period, the method for unlocking the electronic cigarette further comprises:
adjusting the current parameter if the parameter adjustment action exists during the first preset time period.

Preferably, subsequent to the step of adjusting the current parameter if the parameter adjustment action exists during the first preset time period, the method for unlocking the electronic cigarette further comprises:
acquiring the adjusted change parameter to determine whether to store the change parameter; and
storing the change parameter and updating the current mode when an instruction to store the change parameter is detected.

In addition, in order to achieve the above object, the present invention further provides a device for unlocking an electronic cigarette, wherein the device for unlocking the electronic cigarette comprises: a storage, a processor, and a program of unlocking the electronic cigarette stored on the storage and operable on the processor, wherein the program of unlocking the electronic cigarette implements the steps of the method for unlocking the electronic cigarette described above when being executed by the processor.

In addition, in order to achieve the above object, the present invention further provides a computer readable storage medium, wherein a program of unlocking an electronic cigarette is stored in the computer readable storage medium, wherein the program of unlocking the electronic cigarette implements the steps of the method for unlocking an electronic cigarette described above when being executed by the processor.

The present invention receives an unlocking instruction, wakes up a display interface, and acquires a password input by the user; determines whether the password is consistent with the preset password; and finally enters the activation state when the password is consistent with the preset password; therefore, the electronic cigarette enters an activation state by verifying the password input by the user, thereby improving the security of the use of the electronic cigarette.

### BRIEF DESCRIPTION OF THE DRAWINGS

FIG. 1 is a schematic diagram illustrating the structure of a terminal to which a device for unlocking an electronic cigarette belongs in a hardware operating environment according to an embodiment of the present invention.
FIG. 2 is a schematic flow diagram illustrating a first embodiment of a method for unlocking an electronic cigarette according to the present invention.
FIG. 3 is a schematic flow diagram illustrating a second embodiment of a method for unlocking an electronic cigarette according to the present invention.

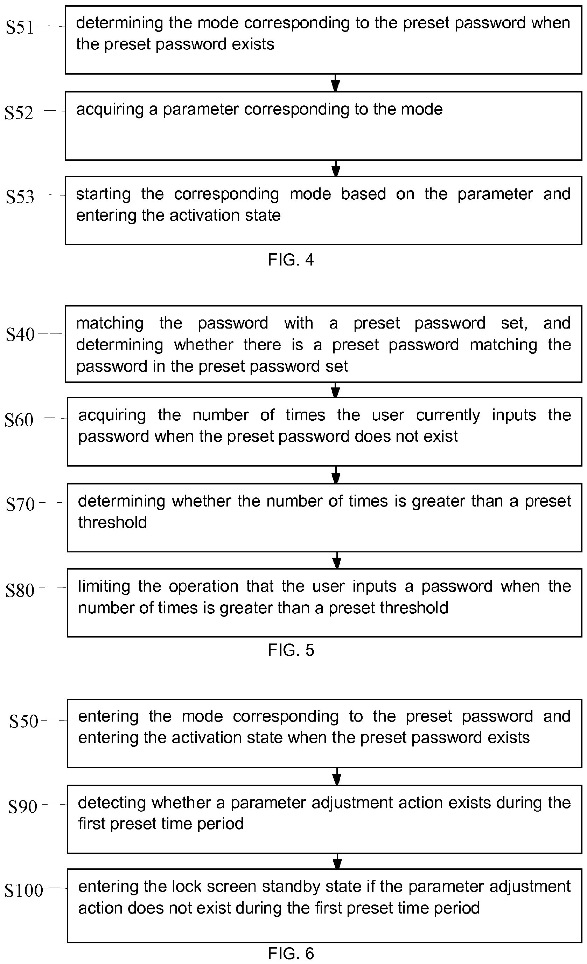

FIG. 4 is a schematic detailed flow diagram illustrating a step of entering the mode corresponding to the preset password and entering an activation state when the preset password exists in the third embodiment of the method for unlocking an electronic cigarette according to the present invention.
FIG. 5 is a schematic flow diagram illustrating a fourth embodiment of a method for unlocking an electronic cigarette according to the present invention.
FIG. 6 is a schematic flow diagram illustrating a fifth embodiment of a method for unlocking an electronic cigarette according to the present invention.

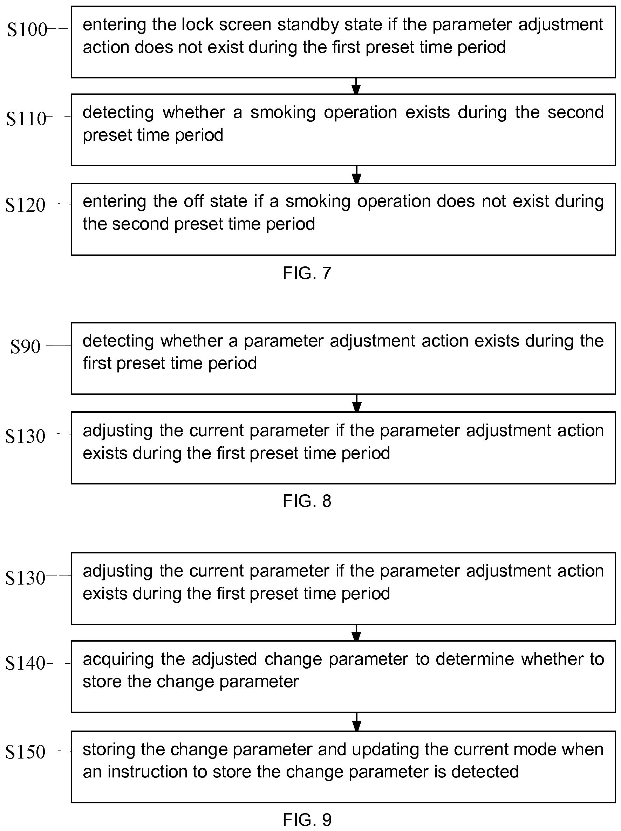

FIG. 7 is a schematic flow diagram illustrating a sixth embodiment of a method for unlocking an electronic cigarette according to the present invention.
FIG. 8 is a schematic flow diagram illustrating a seventh embodiment of a method for unlocking an electronic cigarette according to the present invention.
FIG. 9 is a schematic detailed flow diagram illustrating a step of entering the corresponding password input interface based on the trajectory and the end position in the eighth embodiment of the method for unlocking an electronic cigarette according to the present invention.

The implementation of aims, the function features and the advantages of the present invention are described below in further detail in conjunction with embodiments with reference to the drawings.

### DESCRIPTION OF THE EMBODIMENTS

It is to be understood that the specific embodiments described herein are merely illustrative of the present invention and are not intended to define the present invention.

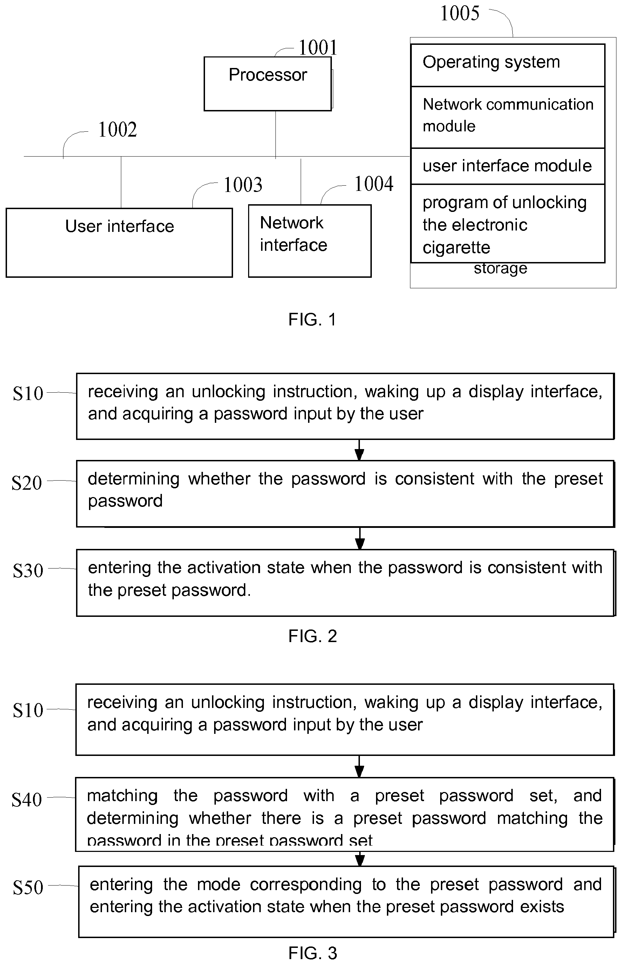

As shown in FIG. 1, FIG. 1 is a schematic diagram illustrating the structured of a terminal to which a device for unlocking an electronic cigarette belongs in a hardware operating environment according to an embodiment of the present invention.

The terminal of the embodiment of the present invention may be a PC. As shown in FIG. 1, the terminal may comprise a processor 1001, such as a CPU, a network interface 1004, a user interface 1003, a storage 1005, and a communication bus 1002. The communication bus 1002 is configured to implement connection communication between these components. The user interface 1003 may comprise a display and an input unit such as a keyboard. Preferably, the user interface 1003 may further comprise a standard wired interface and a wireless interface. The network interface 1004 may preferably comprise a standard wired interface and a wireless interface (such as a WI-FI interface). The storage1005 may be a high-speed RAM memory or a non-volatile memory such as a magnetic disk storage. The storage 1005 may preferably be a storage device independent of the processor 1001 described above.

Preferably, the terminal may further comprise a camera, a Radio Frequency (RF) circuit, a sensor, an audio circuit, a WiFi module, etc. The example of the sensor comprises an optical sensor, a motion sensor, or other sensors, for example. Specifically, the optical sensor may comprise an ambient optical sensor and a proximity sensor, wherein the ambient optical sensor may adjust the brightness of the display according to the brightness of the ambient light, and the proximity sensor may turn off the display and/or backlight when the mobile terminal moves to the ear. As one of the motion sensors, a gravity acceleration sensor may detect the magnitude of the acceleration in the direction (in general tri-axial), may detect the magnitude and direction of gravity when being stationary, and may be configured to identify the application of the attitude of the mobile terminal (such as horizontal and vertical screen switching, a related game, magnetometer attitude calibration), vibration recognition related functions (such as a pedometer, tapping), etc.; of course, the mobile terminal may also be equipped with other sensors such as a gyroscope, a barometer, a hygrometer, a thermometer, an infrared sensor, etc., which will not be described herein.

It is to be understood by those skilled in the art that the terminal structure shown in FIG. 1 does not constitute a limitation to the terminal, and may comprise more or less components than those illustrated, or a combination of some components, or different component arrangements.

As shown in FIG. 1, the storage 1005 as a computer storage medium may comprise an operation server, a network communication module, a user interface module, and a program of unlocking the electronic cigarette.

In the terminal shown in FIG. 1, the network interface 1004 is mainly configured to be connected to a background server for data communication with a background server; the user interface 1003 is mainly configured to be connected to a client (a user side) for data communication with the client; and the processor 1001 may be configured to invoke a program of unlocking the electronic cigarette stored in the storage 1005.

In this embodiment, the device for unlocking the electronic cigarette comprises: a storage 1005, a processor 1001, and a program of unlocking the electronic cigarette stored on the storage 1005 and operable on the processor 1001, wherein the processor 1001 executes the following operations when invoking the program of unlocking the electronic cigarette stored in the storage 1005:
receiving an unlocking instruction, activating a display interface, and acquiring a password input by the user;
determining whether the password is consistent with the preset password; and
entering the activation state when the password is consistent with the preset password.

Further, the processor 1001 may invoke the program of unlocking the electronic cigarette stored in the storage 1005, and further execute the following operations:
matching the password with a preset password set, and determining whether there is a preset password matching the password in the preset password set, wherein the preset password set comprises a plurality of passwords, and each of the passwords corresponds to each mode; and
entering the mode corresponding to the preset password and entering the activation state when the preset password exists.

Further, the processor 1001 may invoke the program of unlocking the electronic cigarette stored in the storage 1005, and further execute the following operations:
determining the mode corresponding to the preset password when the preset password exists;
acquiring a parameter corresponding to the mode; and
starting the corresponding mode based on the parameter and entering the activation state.

Further, the processor 1001 may invoke the program of unlocking the electronic cigarette stored in the storage 1005, and further execute the following operations:
acquiring the number of times the user currently inputs the password when the preset password does not exist;
determining whether the number of times is greater than a preset threshold; and
limiting the operation that the user inputs a password when the number of times is greater than a preset threshold.

Further, the processor 1001 may invoke the program of unlocking the electronic cigarette stored in the storage 1005, and further execute the following operations:
detecting whether a parameter adjustment action exists during the first preset time period; and
entering the lock screen standby state if the parameter adjustment action does not exist during the first preset time period.

Further, the processor 1001 may invoke the program of unlocking the electronic cigarette stored in the storage 1005, and further execute the following operations:
detecting whether a smoking operation exists during the second preset time period; and
entering the off state if a smoking operation does not exist during the second preset time period.

Further, the processor 1001 may invoke the program of unlocking the electronic cigarette stored in the storage 1005, and further execute the following operations:
adjusting the current parameter if the parameter adjustment action exists during the first preset time period.

Further, the processor 1001 may invoke the program of unlocking the electronic cigarette stored in the storage 1005, and further execute the following operations: determining whether the trajectory matches the preset trajectory;
acquiring the adjusted change parameter to determine whether to store the change parameter; and
storing the change parameter and updating the current mode when an instruction to store the change parameter is detected.

The present invention further provides a method for unlocking an electronic cigarette. Referring to FIG. 2, FIG. 2 is a schematic flow diagram illustrating a first embodiment of a method for unlocking an electronic cigarette according to the present invention.

In this embodiment, the method for unlocking the electronic cigarette comprises the following steps.

At Step S10, an unlocking instruction is received, a display interface is activated, and a password input by the user is acquired.

In this embodiment, the unlocking instruction may be triggered by detecting that the user presses the key or presses the pressing sensor provided on the electronic cigarette, such as by detecting the pressure sensor on the back of the electronic cigarette, the control key provided on the side of the electronic cigarette, and the pressure sensor provided on each side of the electronic cigarette such as the left side, the right side, the top side, or the bottom side. When the unlocking instruction triggered by the user is received, the password input interface is pushed to the display interface of the electronic cigarette. The user may input the password in the manner of the key number, the touch screen number, the fingerprint, the voice, etc.

At Step S20, it is determined whether the password is consistent with the preset password.

At Step S30, the activation state is entered when the password is consistent with the preset password.

In this embodiment, the preset password is set by the user. For example, the user may directly set the preset password in the password setting interface or set the preset password by inputting the initial password of the electronic cigarette in the password setting interface when purchasing the electronic cigarette. The initial password comprises the factory original password of the electronic cigarette. In this activation state, the user may adjust the parameter of the electronic cigarette, and may also perform a smoking action. The manner of setting a password comprises setting through the number, the letter, the character, the fingerprint, the voice, etc. When the password input by the user is acquired, it is determined whether the password is consistent with the preset password. For example, when the password verification mode is key input, the user may input a different number or letter by pressing a key to input a password. If the input number or letter is consistent with the preset password, the activation state is entered. Alternatively, when the password verification mode is fingerprint verification, the fingerprint information input by the user is acquired. It is determined whether the fingerprint information input by the user is consistent with the preset fingerprint information. When the fingerprint information input by the user is consistent with the preset fingerprint information, the activation state is entered. Still alternatively, when the password verification mode is voice verification, the voice information input by the user is acquired. It is determined whether the voice information input by the user is consistent with the preset voice information. When the voice information input by the user is consistent with the preset voice information, the activation state is entered. Of course, the password verification mode in this embodiment comprises not only the key number, the fingerprint, the voice, etc.

The method for adjusting the electronic cigarette according to the embodiment comprises receiving an unlocking instruction, activating a display interface, and acquiring a password input by the user; determining whether the password is consistent with the preset password; and entering the activation state when the password is consistent with the preset password; the method realizes that the electronic cigarette enters an activation state by verifying the password input by the user, thereby improving the security of the use of the electronic cigarette.

Based on the first embodiment, a second embodiment of the method for unlocking the electronic cigarette of the present invention is provided. In this embodiment, subsequent to step S10, the method further comprises:

Step S40: matching the password with a preset password set, and determining whether there is a preset password matching the password in the preset password set, wherein the preset password set comprises a plurality of passwords, and each of the passwords corresponds to each mode.

In this embodiment, the preset password is set by the user. The preset password set comprises a plurality of preset passwords set by the user. A plurality of passwords may be stored in the electronic cigarette storage system. Each password may correspond to different modes. Different modes are entered by inputting different passwords. For example, when the password verification mode is key input, the user may input different numbers or letters by pressing the key to input the password. If there is a preset password matching the number, letter or character input by the user among the plurality of passwords stored in the electronic cigarette storage system, the mode corresponding to the preset password can be entered. Alternatively, when the password verification mode is fingerprint verification, the fingerprint information input by the user is acquired. A plurality of fingerprint information may be stored in the electronic cigarette storage system. It is determined whether there is fingerprint information matching the fingerprint information of the current user among the plurality of fingerprint information. When there is fingerprint information matching the fingerprint information of the current user among the plurality of fingerprint information, the mode corresponding to the fingerprint information of the current user is entered. Alternatively, when the password verification mode is voice verification, the voice information input by the user is acquired. A plurality of sets of voice information may be stored in the electronic cigarette storage system. It is determined whether there is voice information matching the voice information input by the current user among the plurality of sets of voice information. If there is voice information matching the voice information input by the current user among the plurality of sets of voice information, the mode corresponding to the voice information input by the current user is entered. Of course, the password verification mode in this embodiment comprises not only the key number, the fingerprint, the voice, etc.

Step S50: When the preset password exists, the mode corresponding to the preset password is entered.

In this embodiment, when there is a preset password matching the password input by the current user in the preset password set, the parameter corresponding to the preset password is acquired. The parameter comprises operating time, operating power, operating current, operating voltage, etc., of the atomizer. The operating time, operating power, operating current, operating voltage, etc., of the atomizer is adjusted according to the parameter. The mode corresponding to the preset password is entered.

The method for unlocking the electronic cigarette according to the embodiment matches the password with a preset password set, and determines whether there is a preset password matching the password in the preset password set, wherein the preset password set comprises a plurality of passwords, and each of the passwords corresponds to each mode; and enters the mode corresponding to the preset password when the preset password exists; the method realizes entering the corresponding mode according to the preset password, thereby improving the security performance of the electronic cigarette. Moreover, the method is applicable to a plurality of modes, improving the user experience.

Based on the second embodiment, a third embodiment of the method for unlocking the electronic cigarette of the present invention is provided. In this embodiment, step S50 comprises:
Step S51: determining the mode corresponding to the preset password when the preset password exists.

In this embodiment, the preset password refers to a pre-stored password corresponding to the password input by the user in the electronic cigarette storage system. When a preset password exists in the electronic cigarette storage system, the mode corresponding to the preset password is determined. The mode may be a mode in different scenes set by the same user, or a mode set by different users according to different smoking habits.

At Step S52, a parameter corresponding to the mode is acquired.

In this embodiment, the parameter comprises operating parameters such as operating time, operating power, operating current, and operating voltage of the electronic cigarette atomizer. Different modes of the electronic cigarette may correspond to different parameters. Of course, different modes of the electronic cigarette may correspond to the same parameters. For example, two users with the same smoking habits may set the same parameters, so the corresponding parameters are the same in different modes.

At step S53, the corresponding mode is started based on the parameter, and the activation state is entered.

In this embodiment, when the operating parameters of the electronic cigarette are different, the entered modes are different, and the user is given a different smoking feeling. Of course, the user may set different parameters according to his/her preference of smoking, and then save the parameters. When the electronic cigarette is used next time, the corresponding mode may be entered according to the set parameters by inputting the corresponding password.

The method for unlocking the electronic cigarette according to the embodiment determines the mode corresponding to the preset password when the preset password exists, acquires a parameter corresponding to the mode, and finally starts the corresponding mode based on the parameter and enters the activation state; the method realizes entering the corresponding mode according to the preset password, thereby improving the security of the use of the electronic cigarette. Moreover, the method is applicable to a plurality of modes, improving the user experience.

Based on the third embodiment, a fourth embodiment of the method for unlocking the electronic cigarette of the present invention is provided. In this embodiment, subsequent to step S40, the method further comprises:
Step S60: acquiring the number of times the user currently inputs the password when the preset password does not exist.

In this embodiment, when the preset password does not exist, it indicates that the password input by the user is incorrect. Any of all the storage modes cannot be started. The prompt message for re-inputting the password is sent to the electronic cigarette display interface. The user may re-input the password according to the prompt. Of course, each time the user inputs the password, the number of times the user inputs the password is recorded, for example, three times, four times, etc.

At Step S70, it is determined whether the number of times is greater than a preset threshold.

In this embodiment, the preset threshold refers to the maximum number of times the password set by those skilled in the art is input, for example, three times, four times, etc. The number of times the user inputs the password is limited. It is detected whether the number of times the user currently inputs the password is greater than a preset threshold when the user inputs an incorrect password, that is, whether the number of times the user currently inputs the password exceeds the maximum number of times the password is input.

At Step S80, the operation that the user inputs a password is limited when the number of times is greater than a preset threshold.

In this embodiment, when it is detected that the number of times the user currently inputs the password is greater than a preset threshold, the operation that the user inputs a password is limited, comprising prompting the user to input the password again after a certain period of time, or prompting the user to perform the second password verification. The second password verification comprises an original password or a second password set by the user, and the second password further comprises the key input, the fingerprint, the voice, etc.

The method for unlocking the electronic cigarette according to the embodiment acquires the number of times the user currently inputs the password when the preset password does not exist, determines whether the number of times is greater than a preset threshold, and finally limits the operation that the user inputs a password when the number of times is greater than a preset threshold; the method realizes limiting the operation that the user inputs a password repeatedly by limiting the number of times a password is input, thereby preventing the user from repeatedly inputting an incorrect password, and improving the security of the electronic cigarette.

Based on the fourth embodiment, a fifth embodiment of the method for unlocking the electronic cigarette of the present invention is provided. In this embodiment, subsequent to step S50, the method further comprises:
Step S90, detecting whether a parameter adjustment action exists during the first preset time period; and
Step S100, entering the lock screen standby state if the parameter adjustment action does not exist during the first preset time period.

In this embodiment, the first preset time period may be set by the user, for example, ten seconds, twenty seconds, etc. The user may determine whether a parameter adjustment action exists during the first preset time period by detecting the pressure sensor on the back of the electronic cigarette, the control key provided on the side of the electronic cigarette, and the pressure sensor provided on each side of the electronic cigarette such as the left side, the right side, the top side, or the bottom side. If it is detected that a parameter adjustment action exists during the first preset time period, the electronic cigarette is controlled to enter the lock screen standby state. In the lock screen standby state, the user may perform a smoking action, but the parameter cannot be adjusted.

The method for unlocking an electronic cigarette according to the embodiment detects whether a parameter adjustment action exists during the first preset time period, and enters the lock screen standby state if the parameter adjustment action does not exist during the first preset time period; avoiding the mis-operation of the user, and further improving the security of the use of the electronic cigarette.

Based on the fifth embodiment, a sixth embodiment of the method for unlocking the electronic cigarette of the present invention is provided. In this embodiment, subsequent to step S100, the method further comprises:
Step S110, detecting whether a smoking operation exists during the second preset time period; and
Step S120, entering the off state if a smoking operation does not exist during the second preset time period.

In this embodiment, some electronic cigarettes use an electronic air flow sensor to start the heating element. The inhalation of the user enables the battery circuit to operate. The user needs to press a button and then smoke for those of manually sensing type so as to determine that the user performs a smoking operation by detecting the electronic air flow sensor, the button or the sensor corresponding to the button. The second preset time period refers to a certain time period set by the user, comprising thirty seconds, sixty seconds, two minutes, etc.

Further, if the smoking operation of the user is not detected within the preset time period, the electronic cigarette automatically enters the off state, for example, exiting the current mode, turning off the screen, etc. When the user does not use the electronic cigarette within the preset time period, the electronic cigarette automatically enters the off state, saving the power consumption, and at the same time, preventing other users from using the electronic cigarette, thereby improving the security of the use of the electronic cigarette.

The method for unlocking an electronic cigarette according to this embodiment detects whether a smoking operation exists during the second preset time period, and enters the off state if a smoking operation does not exist during the second preset time period; the method realizes that the electronic cigarette automatically enters the locked state when the user does not use the electronic cigarette within the preset time period, saving the power consumption, and at the same time, preventing other users from using the electronic cigarette, thereby improving the security of the use of the electronic cigarette.

Based on the sixth embodiment, a seventh embodiment of the method for unlocking the electronic cigarette of the present invention is provided. In this embodiment, subsequent to step S90, the method further comprises:
Step 130, adjusting the current parameter if the parameter adjustment action exists during the first preset time period.

In this embodiment, the current parameter comprises operating time, operating power, operating current, operating voltage, etc., of the atomizer. It is determined whether a parameter adjustment action exists during the first preset time period by detecting the pressure sensor on the back of the electronic cigarette, the control key provided on the side of the electronic cigarette, and the pressure sensor provided on each side of the electronic cigarette such as the left side, the right side, the top side, or the bottom side. If it is detected that a parameter adjustment action exists during the first preset time period, the current parameter is adjusted according to the user parameter adjustment action, and the operating time, operating power, operating current, and operating voltage of the electronic cigarette atomizer are adjusted.

The method for unlocking the electronic cigarette according to the embodiment adjusts the current parameter if the parameter adjustment action exists during the first preset time period; the method realizes that the current parameter of the electronic cigarette is adjusted according to the user adjustment action, thereby further improving the user experience.

Based on the seventh embodiment, an eighth embodiment of the method for unlocking the electronic cigarette of the present invention is provided. In this embodiment, subsequent to step S130, the method further comprises:
Step S140, acquiring the adjusted change parameter to determine whether to store the change parameter.

In this embodiment, the user may adjust the electronic cigarette in the process of using the electronic cigarette. The operating parameters of the electronic cigarette will change, comprising the change of operating parameters such as operating time, operating power, operating current, and operating voltage of the electronic cigarette atomizer. The change parameter refers to the adjusted parameter. After the current parameter change is detected, the adjusted change parameter will be acquired.

At Step S150, the change parameter is stored and the current mode is updated when an instruction to store the change parameter is detected.

In this embodiment, when the user adjusts the parameter, the prompt message as to whether to store the adjusted change parameter is sent to the display interface. The user may trigger the instruction to store the change parameter by the operations such as clicking a button, a voice touch key, etc. The adjusted change parameter is stored, and the current mode is updated. Updating the current mode comprises setting the parameter of the current mode as the adjusted change parameter. When entering the current mode next time, the user can input the corresponding password to enter the current mode according to the change parameter.

The method for unlocking the electronic cigarette according to the embodiment acquires the adjusted change parameter to determine whether to store the change parameter, and stores the change parameter and updates the current mode when an instruction to store the change parameter is detected; the method realizes that the current mode may be updated at any time, so that the user may adjust the operating parameters according to the preference, thereby improving the user experience.

The present invention further provides a computer readable storage medium. In this embodiment, a program of unlocking an electronic cigarette is stored in the computer readable storage medium, wherein:
an unlocking instruction is received, a display interface is activated, and a password input by the user is acquired;
it is determined whether the password is consistent with the preset password; and
the activation state is entered when the password is consistent with the preset password.

Further, the program of unlocking the electronic cigarette may further implement the following steps when being executed by the processor:
matching the password with a preset password set, and determining whether there is a preset password matching the password in the preset password set, wherein the preset password set comprises a plurality of passwords, and each of the passwords corresponds to each mode; and
entering the mode corresponding to the preset password and entering the activation state when the preset password exists.

Further, the program of unlocking the electronic cigarette may further implement the following steps when being executed by the processor:
determining the mode corresponding to the preset password when the preset password exists;
acquiring a parameter corresponding to the mode; and
starting the corresponding mode based on the parameter and entering the activation state.

Further, the program of unlocking the electronic cigarette may further implement the following steps when being executed by the processor:
acquiring the number of times the user currently inputs the password when the preset password does not exist;
determining whether the number of times is greater than a preset threshold; and
limiting the operation that the user inputs a password when the number of times is greater than a preset threshold.

Further, the program of unlocking the electronic cigarette may further implement the following steps when being executed by the processor:
detecting whether a parameter adjustment action exists during the first preset time period; and
entering the lock screen standby state if the parameter adjustment action does not exist during the first preset time period.

Further, the program of unlocking the electronic cigarette may further implement the following steps when being executed by the processor:
detecting whether a smoking operation exists during the second preset time period; and
entering the off state if a smoking operation does not exist during the second preset time period.

Further, the program of unlocking the electronic cigarette may further implement the following steps when being executed by the processor:
adjusting the current parameter if the parameter adjustment action exists during the first preset time period.

Further, the program of unlocking the electronic cigarette may further implement the following steps when being executed by the processor:
acquiring the adjusted change parameter to determine whether to store the change parameter; and
storing the change parameter and updating the current mode when an instruction to store the change parameter is detected.

It is to be understood that the term "comprises", "includes", or any other variants thereof herein is intended to encompass a non-exclusive inclusion, such that a process, method, article, or system comprising a series of elements not only comprises those elements, but also comprises other elements that are not explicitly listed, or elements that are inherent to such a process, method, article, or system. An element defined by the phrase "comprising a..." does not exclude the presence of additional equivalent elements in the process, method, article, or system comprising the element without further limitation.

The serial numbers of the embodiments of the present invention described above are merely for the description, rather than representing that the embodiments are superior or inferior.

Through the description of the above embodiments, those skilled in the art may clearly understand that the above embodiment method may be implemented by means of software plus a necessary general hardware platform, and of course, and may also be implemented by means of hardware, but in many cases, the former is a better implementation. Based on such understanding, the technical solution of the present invention in essence or the part contributing to the prior art may be embodied in the form of a software product stored in a storage medium (such as ROM/RAM, a disk, and an optical disk), comprising several instructions for causing a terminal device (which may be a mobile phone, a computer, a server, an air conditioner, or a network device, etc.) to execute the methods described in various embodiments of the present invention.

The above are preferred embodiments of the present invention merely and are not intended to limit the patent scope of the present invention. Any equivalent structures made according to the description and the accompanying drawings of the present invention without departing from the idea of the present invention, or any equivalent structures applied in other relevant technical fields directly or indirectly are intended to be comprised in the patent protection scope of the present invention.

## Claims

1. A method for unlocking an electronic cigarette, wherein the method for unlocking the electronic cigarette comprises steps of:
receiving an unlocking instruction, activating a display interface, and acquiring a password input by the user;
determining whether the password is consistent with a preset password; and
entering an activation state when the password is consistent with the preset password.

2. The method for unlocking an electronic cigarette according to claim 1, wherein subsequent to the step of receiving an unlocking instruction, activating a display interface, and acquiring a password input by the user, the method for unlocking the electronic cigarette further comprises:
matching the password with a preset password set, and determining whether here is a preset password matching the password in the preset password set, wherein the preset password set comprises a plurality of passwords, and each of the passwords corresponds to each mode; and
entering the mode corresponding to the preset password and entering the activation state when the preset password exists.

3. The method for unlocking an electronic cigarette according to claim 2, wherein the step of entering the mode corresponding to the preset password and entering the activation state when the preset password exists comprises:
determining the mode corresponding to the preset password when the preset password exists;
acquiring a parameter corresponding to the mode; and
starting the corresponding mode based on the parameter and entering the activation state.

4. The method for unlocking an electronic cigarette according to claim 3, wherein subsequent to the step of matching the password with a preset password set, and determining whether there is a preset password matching the password in the preset password set, wherein the preset password set comprises a plurality of passwords, and each of the passwords corresponds to each mode, the method for unlocking the electronic cigarette further comprises:
acquiring the number of times the user currently inputs the password when the preset password does not exist;
determining whether the number of times is greater than a preset threshold; and
limiting the operation that the user inputs a password when the number of times is greater than a preset threshold.

5. The method for unlocking an electronic cigarette according to claim 2, wherein subsequent to the step of entering the mode corresponding to the preset password and entering the activation state when the preset password exists, the method for unlocking the electronic cigarette further comprises:
detecting whether a parameter adjustment action exists during the first preset time period; and
entering the lock screen standby state if the parameter adjustment action does not exist during the first preset time period.

6. The method for unlocking an electronic cigarette according to claim 5, wherein subsequent to the step of entering the lock screen standby state if the parameter adjustment action does not exist during the first preset time period, the method for unlocking the electronic cigarette further comprises:
detecting whether a smoking operation exists during the second preset time period; and
entering the off state if a smoking operation does not exist during the second preset time period.

7. The method for unlocking an electronic cigarette according to claim 5, wherein subsequent to the step of detecting whether a parameter adjustment action exists during the first preset time period, the method for unlocking the electronic cigarette further comprises:
adjusting the current parameter if the parameter adjustment action exists during the first preset time period.

8. The method for unlocking an electronic cigarette according to claim 7, wherein subsequent to the step of adjusting the current parameter if the parameter adjustment action exists during the first preset time period, the method for unlocking the electronic cigarette further comprises:
acquiring the adjusted change parameter to determine whether to store the change parameter; and
storing the change parameter and updating the current mode when an instruction to store the change parameter is detected.

9. A device for unlocking an electronic cigarette, wherein the device for unlocking the electronic cigarette comprises: a storage, a processor, and a program of unlocking the electronic cigarette stored on the storage and operable on the processor, wherein the program of unlocking the electronic cigarette implements the steps of the method according to any one of claims 1 to 8 when being executed by the processor.

10. A computer readable storage medium, wherein a program for unlocking an electronic cigarette is stored in the computer readable storage medium, wherein the program of unlocking the electronic cigarette implements the steps of the method for unlocking an electronic cigarette according to any one of claims 1 to 8 when being executed by the processor.
